# EUROPEAN PATENT SPECIFICATION

(11) **EP 0 327 108 B1**
(45) Date of publication and mention of the grant of the patent: **28.12.1994**
(21) Application number: 89101925.9
(22) Date of filing: 03.02.1989
(51) Int. Cl.: G05B 19/407

(54) **Transducer access control system**
Zugriffsteuersystem für einen Wandlerkopf
Système de commande d'accès à un transducteur

(30) Priority: 05.02.1988 JP 26265/88
(43) Date of publication of application: 09.08.1989
(73) Proprietor: SHARP KABUSHIKI KAISHA, Osaka 545 (JP)
(72) Inventor: Horie, Nobuyuki, Yamatokoriyama-shi Nara-ken (JP); Yamane, Daiji, Yamatokoriyama-shi Nara-ken (JP); Nishioka, Yoshiki, Tenri-shi Nara-ken (JP); Yuki, Yoshio, Nabari-shi Mie-ken (JP)
(74) Representative: TER MEER STEINMEISTER & PARTNER GbR

(56) References cited:
- EP-A- 0 055 334
- US-A- 4 099 112
- US-A- 4 547 822
- US-A- 4 591 933

## Description

### BACKGROUND OF THE INVENTION

### 1. Field of the Invention

The present invention relates to a transducer access control system for use in a disk recording/reproducing apparatus for moving a transducer a required distance from its present position over a disk in the radial direction thereof to the vicinity of a target position.

### 2. Description of the Prior Art

In general, rough access and precision access control systems are applied in devices for recording and playing back data from a disk-type recording medium provided with data tracks formed either concentrically or spirally in the radial direction. Rough access is executed to move the transducer into the vicinity of the target position, and is followed by precision access locating the transducer finally at the target position. Rough access drive is accomplished e. g. by a linear motor. The present invention relates to rough access.

A system according to the preamble of claim 1 is described in US-A-4,591,933. A fundamental reference velocity profile is stored in a memory for each possible seek distance between an actual position and a target position. This profile is typically well below the optimum profile for achieving minimum access time. When rough access was successful by using the fundamental profile, the values of this profile are multiplied with a factor greater than one, the next time a rough access has to be made for the same seek distance. This factor is increased stepwise each time the rough access was successful. Due to this adaptive control, the access time becomes shorter and shorter, till finally an access is unsuccessful. Then, the factor is decreased by one step. The velocity profile as shown in figures of the above mentioned document is a symmetrical triangular profile, i. e. a profile in which a constant acceleration is present within the first half of the seek distance till a midpoint, and a deceleration of the same value is present within the second half of the seek distance. The description does not mention that the acceleration phase and the deceleration phase should have the same length, however, it is stated that the shown profile is a triangular profile, and that the system could be incorporated with other velocity profiles.

US-A-4,547,822 describes a system which is very similar to the above mentioned one. One difference is that the memory does not store velocity/distance-profiles but position/time-profiles, and that a calculation means is provided for calculating the half distance position which is located in the middle between the present and the target positions. When a certain position/time-profile, which corresponds to the seek distance to be covered, is read from the memory, it is converted into a velocity/distance-profile. This profile is symmetrical in relation to the just mentioned half distance position. Either, the velocity increases linearly with increasing distance from the present position till the mid-point is reached, and decreases then with the same (negative instead of positive) slope, or the velocity increases within a first section of the acceleration phase, is then constant till the half distance position, and has then the symmetrical behaviour in the deceleration phase, i. e. it keeps constant for the same distance as in the acceleration phase, and decreases then with the same (negative instead of positive) slope as in the first section of the acceleration phase. Also this document describes that it is possible to use other profiles, especially non-symmetrical profiles, in which e. g. the shift to deceleration is performed at a point closer to the target position than the half distance position.

In the both above discussed systems, velocity/distance-profiles are used for accelerating or decelerating the transducer in dependence of the distance from the starting position. The profiles are selected to achieve an access time for the rough access as short as possible.

### SUMMARY OF THE INVENTION

It is the object of the present invention to provide a transducer access control system for achieving high speed and high precision rough access.

The system of the present invention is defined by the teaching of claim 1.

This system is based on the following perception. When arriving at the half distance position, the transducer should have a predetermined velocity which is predetermined in such a way that it can be successfully decelerated in the deceleration phase till the velocity is zero, to be then positioned in the vicinity of the target position. In the prior art systems, this predetermined velocity at the beginning of the deceleration phase is reached via a predetermined acceleration profile. The system of the present invention is arranged to accelerate the transducer head as strongly as possible when starting a rough access process, and to end this very fast acceleration as soon as the transducer head has reached said predetermined velocity. Then, this velocity is kept till the half distance position is reached. Due to this proceeding, the distance between the start position and the half distance position can be covered as fast as possible, thereby achieving high speed access. Further, as the head has just the predetermined velocity when reaching the half distance position, it can then, in the subsequent deceleration phase, be positioned in the vicinity of the target position.

According to a preferred embodiment, it is sufficient to store one single deceleration profile for all seek distances, which profile starts from the half of the maximally possible seek distance. When a rough access has to be performed, the seek distance (required distance) is calculated by the required distance generating means, and then the velocity which is allocated to half of said calculated required distance is read from this single stored curve. Then, the transducer is accelerated as fast as possible, till it reaches the just mentioned velocity which is kept till the transducer reaches the half distance position. Then, its velocity is controlled in dependence of its distance according to said stored curve.

### BRIEF DESCRIPTION OF THE DRAWINGS

These and other objects and features of the present invention will become clear from the following description taken in conjunction with the preferred embodiment thereof with reference to the accompanying drawings, in which:
Fig. 1 is a block diagram showing a basic structure according to a preferred embodiment of the present invention;
Fig. 2 is a block diagram showing a detail of the rough access control section shown in Fig. 1;
Fig. 3 is a flow chart of the rough access control;
Fig. 4 is a graph showing a reference velocity according to the present invention; and
Fig. 5 is a graph showing a data stored in the reference velocity table shown in Fig. 2.

### DETAILED DESCRIPTION OF THE INVENTION

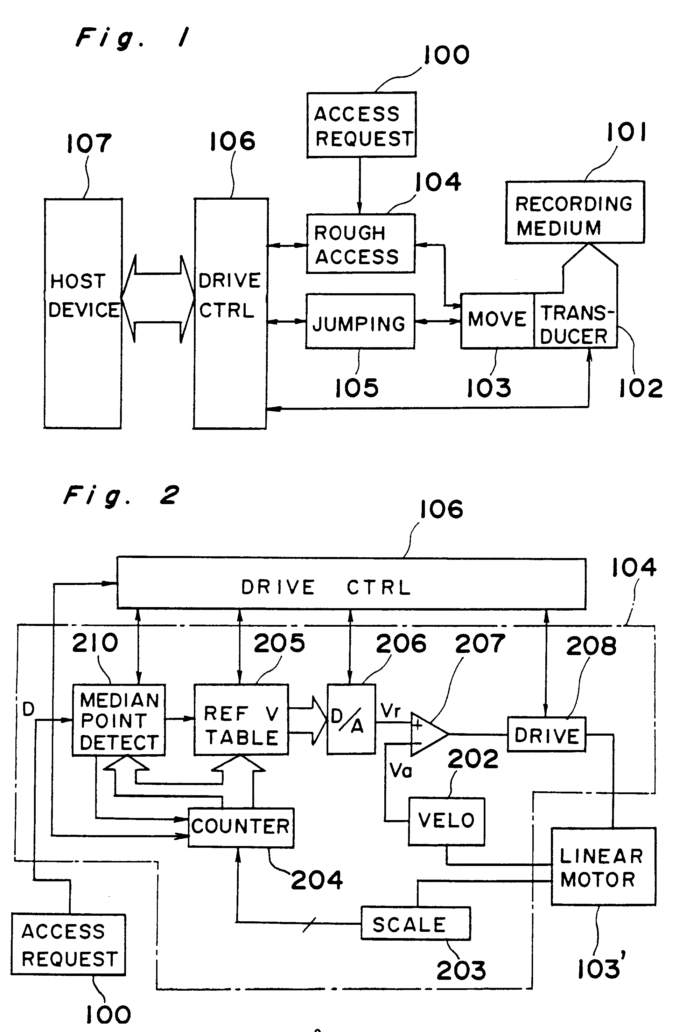

Referring to Fig. 1, a block diagram of a access control system according to the present invention is shown. In the drawing, reference number 101 is a disk-shaped recording medium which has concentric spiral data recording tracks formed radially on the disk, each track being divided into multiple sectors, the sector being the smallest access unit; 102 is a transducer which has a head, pickup, or similar device used to record data to or read data from recording medium 101; 103 is a head moving arrangement which moves the transducer 102 along the recording medium in the radial direction, and is preferably formed by a linear motor 103′ shown in Fig. 2; 100 is a access request circuit for producing a required access distance data D representing a transducer access distance of transducer as requested by the operator or set in a program; 104 is a rough access controller for controlling transducer 102 to move roughly to the requested position P1 from the present position P0 in accordance with the access distance data D (=P0-P1), and is shown in detail in Fig. 2; 105 is a jumping controller for precision access; 106 is a drive controller which controls the device overall; and 107 is a host device such as a host computer which controls the drive device.

Referring to Fig. 2, a detail of the rough access controller 104 is shown which is connected to a linear motor 103′ provided in the head moving arrangement 103 for moving the transducer 102. In Fig. 2, reference number 202 is a velocity detector which detects the velocity (including information of degree and direction) of linear motor 103′; and 203 is a scale which detects the travel distance and direction of linear motor 201, and which generates pulses according to the travel and direction of linear motor 103′ moving the transducer 102. Preferably, scale 203 is defined by a plate scale having a predetermined pitch markings and provided to move in accordance with the linear motor 103′, and a pair of fixed sensors so that the plate scale moves adjacent the sensors. The sensors detect the markings to produces pulses. Thus, by the number of pulses produced from each sensor the amount of movement of the linear motor 103′ is detected and the order of the pulses produced from two sensors indicates the direction of movement of the linear motor 103′.

Furthermore, reference number 204 is an up-down counter for counting the number of pulses generated by scale 203 so that the content of counter 204 represents the present position P0 of the transducer 102; 205 is a reference velocity table defined, e.g., by a memory such as a ROM which carries reference velocity pattern and generates a reference velocity Vr which is based on the value counted by counter 204, particularly on the actual travel distance of linear motor 201 and also on the access distance D. Reference number 206 is a digital-to-analog converter for converting the digital output signal of reference velocity table 205 to analog form. Reference number 207 is a comparator which compares the output value of velocity detector 202 representing the actual velocity Va of the linear motor 103′ with the reference velocity Vr as generated by reference velocity table 205; 208 is a driving circuit for driving linear motor 103′ based on the output signal from comparator 207; and 210 is a median point detector which detects half the distance (½D) of the access distance D based on the access distance data D obtained from the access request circuit 100 and also detects the median point, a point between P0 and P1, based on the output of the counter 204. A reference number 209 is a controller which controls these respective devices.

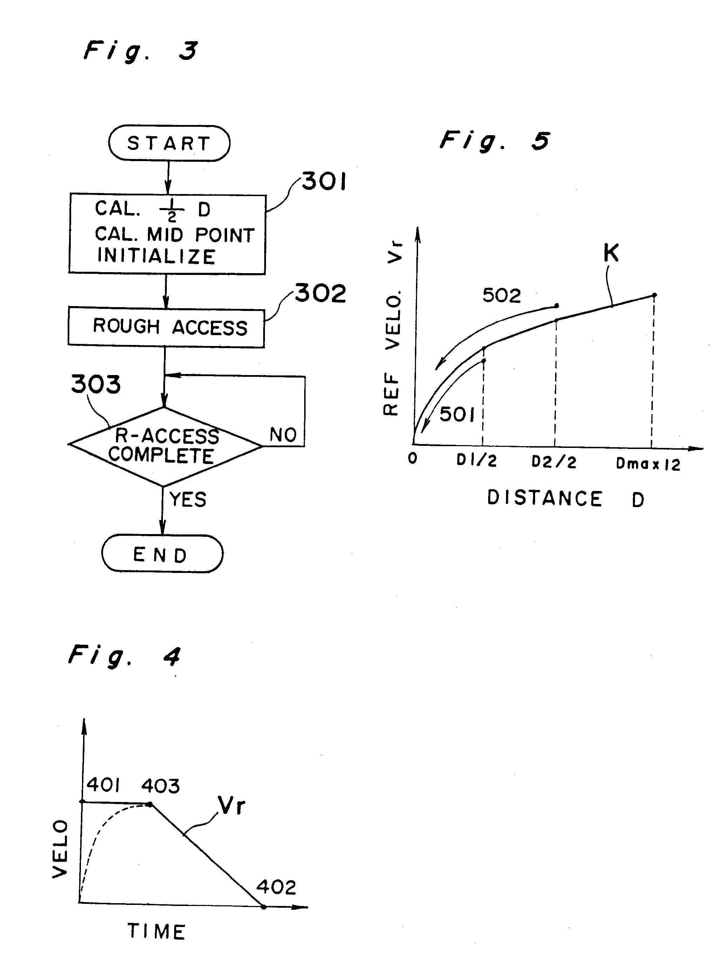

In operation, when a transducer access command is received from host device 107, drive controller 106 executes rough access positioning when the need for rough access is recognized. At this time, access request 100 generates access distance data D which is applied to median point detector 210. Accordingly, median point detector 210 calculates a distance ½D which is equal to one-half the access distance D based on the access distance data D, and also calculates an exact median point, a point between P0 and P1, expressed by the value of counter 204. More specifically, median point detector 210 calculates a distance ½D, and first and second presumed amounts that will be carried in counter 204 when the linear motor 103′, i.e., transducer 102, has moved the distances ½D and D, respectively, from the present position. Furthermore, at this time, controller 209 initializes the other devices (step 301 in Fig. 3).

As shown in Fig. 4, according to the present invention, the velocity pattern for the required reference velocity Vr is such that it starts from the maximum velocity (point 401) and keeps the maximum velocity until the transducer is moved to a median point between the initial position P0 and the target position P1 and, thereafter, the reference velocity Vr decreases. Thus, the actual velocity Va of the linear motor 103′ at the beginning rapidly increases the velocity to reach the maximum velocity (level 401), as indicated by a dotted line in Fig. 4. Accordingly, when compared with the conventional system, the access time can be reduced.

Thus, according to the present invention, because the reference velocity table 205 produces reference velocity vr which is extremely high during the initial acceleration period, the output of comparator 207 is so high (saturated) that driver 208 operates at its maximum capacity, thereby enabling the high acceleration of the linear motor. Moreover, because the maximum velocity which should be attained at median point 403 is not exceeded, loss of deceleration control caused by over-acceleration will not occur.

In order to control the linear motor 103′, and in turn the transducer 102, in the above described manner, the reference velocity table 205 must be provided with enormous amount of patterns for different access distances, resulting in excessively large size table.

Therefore, according to the preferred embodiment of the present invention, median point detector 210 is provided in association with counter 204 to detect the median point so as to minimize the size of the reference velocity table 205, as explained below.

The reference velocity table 205 of the present invention carries a Vr-D relationship table, an example of which can be expressed by a line K shown in Fig. 5 in which the axis of the abscissas shows the travel distance during rough access, and the axis of the ordinates shows the reference velocity data. When a transducer access distance D1 is provided from access request 100, median point detector 210 calculates a half distance ½D1, and, at the same time, first and second presumed amounts that will be carried in counter 204 when the linear motor 103′ (transducer 102) has moved the distances ½D1 and D1, respectively, from the present position are also calculated. Based on the calculated data ½D1, reference velocity table 205 finds on line K a corresponding velocity Vr(½D1) which is produced from table 205 until linear motor 103′ moves the distance ½D1, that is until counter 204 has counted to the first presumed amount. When linear motor 103′ has moved to the median point of the required access distance D1, the reference velocity Vr as produced from reference velocity table 205 gradually decreases by reading the data on line K along an arrow 501 relatively to the travelled distance. Then, when the contents of the counter 204 becomes equal to the second presumed amount, drive control 106 produces a signal to drive 208 to stop the linear motor 103′.

Similarly, when a transducer access distance D2 is provided from access request 100, the same table represented by line K is used. At first, median point detector 210 calculates a half distance ½D2, and, at the same time, first and second presumed amounts that will be carried in counter 204 when the linear motor 103′ has moved the distances ½D2 and D2, respectively, from the present position are also calculated. Based on the calculated data ½D2, reference velocity table 205 finds on line K a corresponding velocity Vr(½D2) which is produced from table 205 until linear motor 103′ moves the distance ½D2, that is counter 204 has counted to the first presumed amount. When linear motor 103′ has moved to the median point of the required access distance D2, the reference velocity Vr as produced from reference velocity table 205 gradually decreases by reading the data on line K along an arrow 502 relatively to the travelled distance. Thereafter, the linear motor 103′ stops when counter 204 counts to the second presumed amount.

Thus, it is not necessary to use a new velocity data table for each travel distance. If the maximum access distance is Dmax in this device and the reference velocity table includes up to reference velocity Vr(½Dmax), the table can be applied to all rough access distances, and the small capacity ROM is sufficient to carry the reference velocity table 205.

In the circuit of Fig. 2, when rough access begins (step 302), counter 204 begins counting the pulses from scale 203. The output of counter 204 is applied to reference velocity table 205 in which the counted result is compared with the first presumed amount so as to detect when the linear motor 103′ has moved to the median point. Until then, a reference velocity Vr corresponding to level 401 (see Fig. 4) is continuously read regardless of the count. Thereafter, when the linear motor 103′ has moved the half distant to past the median point, a reference velocity Vr as produced from reference velocity table 205 decreases gradually along line K relatively to the travel distance of the linear motor.

The digital reference velocity data Vr as produced from reference velocity table 205 is converted to analog form by D/A converter 206 so that it can be compared with the output of velocity detector 202 in comparator 207. Comparator 207 compares the output of D/A converter 206 with the output of velocity detector 202, and produces a difference signal to driver 208. Driver 208 drives linear motor 103′ according to this difference signal. The actual velocity data Va of linear motor 103′ is detected by velocity detector 202, and is fed back to comparator 207, thereby defining a control closed loop to make the actual velocity Va of linear motor 201 follow the reference velocity Vr.

When counter 204 has counted to the second presumed amount, rough access processing is completed (step 303).

A transducer access control system according to the present invention is capable of high preciseness and reliable rough access by utilizing the relationship between velocity data and data identifying the physical position of the transducer.

Furthermore, according to the present invention, because a closed loop is formed using the velocity detector and comparator, a real time control requiring no delay is possible.

Furthermore, according to the present invention, since the reference velocity pattern is such that for the first half distance the maximum velocity is requested, and for the second half distance the gradually decreasing velocity is requested, the transducer accelerates at the maximum capacity of the driving means, i.e., the linear motor, to the median point. Moreover, the transducer is controlled so as to not exceed the velocity which should be attained at the median point. The time to the median point is therefore shorter than that in conventional triangular control methods, thus high speed access is possible, and system efficiency can therefore be increased. Furthermore, because the velocity which should be achieved at the median point does not exceed the maximum possible speed, loss of deceleration control due to over-acceleration does not occur.

## Claims

1. A transducer access control system for use in a disk recording/reproducing apparatus for moving a transducer (102) a required distance (D) from a present position over a disk (101) in the radial direction thereof to the vicinity of a target position, said access control system comprising:
- a velocity detection means (202) for detecting the actual velocity of said transducer (102) and for generating an actual velocity signal;
- a required distance generating means (100) for generating a distance signal indicative of the required distance (D) for moving the transducer from the present to the vicinity of the target position;
- a reference velocity generating means (205) for generating a signal representing a reference velocity (Vr), the temporal shape of which is predetermined in dependence of said required distance (D), said reference velocity decreasing, during a deceleration phase from a maximum value (403), predetermined for each required distance, to zero;
- a position signal producing means (203, 204) for producing a position signal indicative of the position of said transducer (102); and
- a driving means (103′, 208) for driving said transducer (102) in a way that the actual velocity signal as measured by said velocity detection means (202) corresponds as well as possible to said reference velocity signal as generated by said reference velocity generating means (205) for each position as indicated by said position signal as provided by said position signal producing means (203, 204);
**characterized in that**
- a calculation means (210) is provided for calculating the position corresponding to the half (D/2) of said required distance, and for producing a data value indicating said half distance position;
- said reference value generating means (205) is arranged to output position-dependent reference velocity signals only during said deceleration phase which starts as soon as said half distance position is reached, and to constantly output said maximum reference velocity (403) during an acceleration phase starting from the time instant at which said driving means (103′, 208) is activated for moving said transducer (102) from the present position to the target position;
- a comparator means is provided for comparing said reference velocity signal with said actual velocity signal and for producing a difference signal;
- said driving means (103′, 208) is arranged to accelerate the transducer (102) at maximum acceleration in the beginning of said acceleration phase till essentially said maximum reference velocity is reached, and to keep, based on said difference signal, the velocity corresponding to said maximum reference velocity till said half distance position is reached; and
- said reference velocity generating means (205) comprises a memory means which stores values for a single descending curve (K) representing the decrease of the reference velocity (Vᵣ) in dependence on the decrease of the distance (D) towards the target position, whereby said maximum reference velocity (403) is determined as that velocity within said curve (K), which is associated to a distance corresponding to the half (D/2) of said required distance.

2. A transducer access control system as claimed in Claim 1, wherein said driving means (208, 103′) comprises a linear motor (103′) coupled to said transducer (102), and a drive circuit (208) for providing drive signal to said linear motor (103′).

3. A transducer access control system as claimed in Claim 2, wherein said position signal producing means (203, 204) comprises a pulse generating means (203) for generating pulses relatively to the movement of said linear motor (103′), and a counter means (204) for counting said pulses, so that the content of said counter means representing the position of said transducer (102).

4. A transducer access control system as claimed in Claim 3, wherein said calculation means (210) produces data indicative of said half distance (½D), and first and second presumed amounts that will be carried in said counter means (204) when said transducer (102) has moved the distances ½D and D, respectively, from the present position.

## Patentansprüche

1. Zugriffsteuersystem für einen Wandlerkopf zur Verwendung in einem Platten-Aufzeichnungs/Wiedergabe-Gerät zum Verstellen eines Wandlerkopfs (102) über einen erforderlichen Weg (D) ausgehend von einer vorgegebenen Position in radialer Richtung über die Platte (101) bis in die Nähe einer Zielposition, welches Zugriffsteuersystem folgendes aufweist:
- eine Geschwindigkeitssmeßeinrichtung (202) zum Messen der Istgeschwindigkeit des Wandlerkopfs (102) und zum Erzeugen eines Istgeschwindigkeitssignals;
- eine Erzeugungseinrichtung (100) in bezug auf den erforderlichen Weg, um ein Wegsignal zu erzeugen, das den erforderlichen Weg (D) zum Verstellen des Wandlerkopfs von der aktuellen Position in die Nähe der Zielposition anzeigt;
- eine Bezugsgeschwindigkeit-Erzeugungseinrichtung (205) zum Erzeugen eines eine Bezugsgeschwindigkeit (Vr) repräsentierenden Signals, dessen zeitliche Änderung abhängig vom erforderlichen Weg (D) vorgegeben ist, wobei die Bezugsgeschwindigkeit während einer Verzögerungsphase ausgehend von einem Maximalwert (403), wie er für jeden erforderlichen Weg vorgegeben ist, auf Null abnimmt;
- eine Positionssignal-Erzeugungseinrichtung (203, 204) zum Erzeugen eines Positionssignals, das die Position des Wandlerkopfs (102) anzeigt; und
- eine Antriebseinrichtung (103′, 208) zum Betrieben des Wandlerkopfs (102) auf solche Weise, daß das Istgeschwindigkeitssignal, wie es von der Geschwindigkeitsmeßeinrichtung (202) gemessen wird, so gut wie möglich dem Bezugsgeschwindigkeitssignal entspricht, wie es von der Bezugsgeschwindigkeit-Erzeugungseinrichtung (205) erzeugt wird, und zwar für jede Position, wie sie von dem von der Positionssignal-Erzeugungseinrichtung (203, 204) erzeugten Positionssignal angezeigt wird;
**dadurch gekennzeichnet,** daß
- eine Berechnungseinrichtung (210) vorhanden ist, um die der Hälfte (D/2) des erforderlichen Wegs entsprechende Position zu berechnen und um einen Datenwert zu erzeugen, der diese Halbwegposition anzeigt;
- die Bezugsgeschwindigkeit-Erzeugungseinrichtung (205) so ausgebildet ist, daß sie positionsabhängige Bezugsgeschwindigkeitssignale nur während der Verzögerungsphase ausgibt, die beginnt, sobald die Halbwegposition erreicht ist, und daß sie die maximale Bezugsgeschwindigkeit (403) konstant während einer Beschleunigungsphase ausgibt, die ab dem Zeitpunkt startet, zu dem die Antriebseinrichtung (103′, 208) zum Verstellen des Wandlerkopfs (102) von der aktuellen Position auf die Zielposition aktiviert wird;
- eine Komparatoreinrichtung vorhanden ist, um das Bezugsgeschwindigkeitssignal mit dem Istgeschwindigkeitssignal zu vergleichen und ein Abweichungssignal zu erzeugen;
- die Antriebseinrichtung (103′, 208) so ausgebildet ist, daß sie den Wandlerkopf (102) zu Beginn der Beschleunigungsphase mit maximaler Beschleunigung beschleunigt, bis im wesentlichen die maximale Bezugsgeschwindigkeit erreicht ist, und daß sie, auf Grundlage des Abweichungssignals, die der maximalen Bezugsgeschwindigkeit entsprechende Geschwindigkeit aufrechterhält, bis die Halbwegposition erreicht ist; und
- die Bezugsgeschwindigkeit-Erzeugungseinrichtung (205) eine Speichereinrichtung aufweist, die Werte für eine einzelne fallende Kurve (K) speichert, die das Verringern der Bezugsgeschwindigkeit (Vᵣ) abhängig von der Verringerung des Wegs (D) zur Zielposition repräsentiert, wobei die maximale Bezugsgeschwindigkeit (403) als diejenige Geschwindigkeit innerhalb dieser Kurve (K) festgelegt ist, die dem Weg zugeordnet ist, der der Hälfte (D/2) des erforderlichen Wegs entspricht.

2. Zugriffsteuersystem für einen Wandlerkopf nach Anspruch 1, bei dem die Antriebseinrichtung (208, 103′) einen mit dem Wandlerkopf (102) verbundenen Linearmotor (103′) und eine Treiberschaltung (108) zum Ausgeben von Treibersignalen an den Linearmotor (103′) aufweist.

3. Zugriffsteuersystem für einen Wandlerkopf nach Anspruch 2, bei dem die Positionssignal-Erzeugungseinrichtung (203, 204) eine Impulserzeugungseinrichtung (203) zum Erzeugen von Impulsen bezogen auf die Verstellung des Linearmotors (103′) und eine Zählereinrichtung (204) zum Zählen dieser Impulse aufweist, so daβ der Inhalt der Zählereinrichtung die Position des Wandlerkopfs (102) repräsentiert.

4. Zugriffsteuersystem für einen Wandlerkopf nach Anspruch 3, bei dem die Berechnungseinrichtung (210) Daten, die den halben Weg ((1/2) D) anzeigen sowie einen ersten und einen zweiten Annahmewert erzeugt, die in die Zählereinrichtung (204) übertragen werden, wenn der Wandler (102) ausgehend von der aktuellen Position den Weg (1/2) D bzw. D zurückgelegt hat.

## Revendications

1. Système de commande d'accès pour un transducteur, destiné à être utilisé dans un appareil d'enregistrement/lecture de disques pour déplacer un transducteur (102) sur une distance prescrite (D) au-dessus d'un disque (101), dans la direction radiale de ce dernier, d'une position instantanée jusqu'au voisinage d'une position cible, ledit système de commande d'accès comprenant:
- un moyen de détection de vitesse (202) destiné à détecter la vitesse réelle dudit transducteur (102) et à engendrer un signal de vitesse réelle;
- un moyen générateur de distance prescrite (100) destiné à engendrer un signal de distance indicateur de la distance prescrite (D) pour le déplacement du transducteur de la position instantanée jusqu'au voisinage de la position cible;
- un moyen générateur de vitesse de référence (205) destiné à engendrer un signal représentant une vitesse de référence (Vᵣ), dont l'allure de variation dans le temps est prédéterminée en fonction de ladite distance prescrite (D), ladite vitesse de référence décroissant, au cours d'une phase de décélération, d'une valeur maximum (403), prédéterminée pour chaque distance prescrite, jusqu'à zéro;
- un moyen de production de signal de position (203, 204) destiné à produire un signal de position indicateur de la position dudit transducteur (102); et
- un moyen d'entraînement (103′, 208) destiné à entraîner ledit transducteur (102) d'une manière telle que le signal de vitesse réelle, mesuré par ledit moyen de détection de vitesse (202) , corresponde aussi bien que possible audit signal de vitesse de référence, engendré par ledit moyen générateur de vitesse de référence (205), pour chaque position indiquée par ledit signal de position fourni par ledit moyen de production de signal de position (203, 204);
caractérisé en ce que:
- un moyen de calcul (210) est prévu pour calculer la position correspondant à la moitié (D/2) de ladite distance prescrite, et pour produire une valeur de donnée indicatrice de ladite position à mi-distance;
- ledit moyen générateur de valeur de référence (205) est conçu pour délivrer des signaux de vitesse de référence dépendant de la position, uniquement au cours de ladite phase de décélération qui débute dès que ladite position à mi-distance est atteinte, et pour délivrer constamment ladite vitesse de référence maximum (403) au cours d'une phase d'accélération débutant à l'instant auquel ledit moyen d'entraînement (103′, 208) est activé pour déplacer ledit transducteur (102) de la position instantanée à la position cible;
- un moyen comparateur est prévu pour comparer ledit signal de vitesse de référence audit signal de vitesse réelle et pour produire un signal de différence;
- ledit moyen d'entraînement (103′, 208) est conçu pour accélérer le transducteur (102), selon une accélération maximum, au commencement de ladite phase d'accélération, sensiblement jusqu'à ce que ladite vitesse de référence maximum soit atteinte, et pour maintenir, en se fondant sur ledit signal de différence, la vitesse correspondant à ladite vitesse de référence maximum, jusqu'à ce que ladite position à mi-distance soit atteinte; et
- ledit moyen générateur de vitesse de référence (205) comprend un moyen de mémoire qui mémorise des valeurs pour une courbe unique à pente descendante (K) représentant la diminution de la vitesse de référence (Vᵣ) en fonction de la diminution de la distance (D) jusqu'à la position cible, ladite vitesse de référence maximum (403) étant ainsi déterminée comme étant la vitesse qui, sur ladite courbe (K), est associée à une distance correspondant à la moitié (D/2) de ladite distance prescrite.

2. Système de commande d'accès pour un transducteur, tel que défini dans la revendication 1, dans lequel ledit moyen d'entraînement (208, 103′) comprend un moteur linéaire (103′) accouplé audit transducteur (102), et un circuit d'excitation (208) destiné à fournir un signal d'excitation audit moteur linéaire (103′).

3. Système de commande d'accès pour un transducteur, tel que défini dans la revendication 2, dans lequel ledit moyen de production de signal de position (203, 204) comprend un moyen générateur d'impulsions (203) destiné à engendrer des impulsions en relation avec le mouvement dudit moteur linéaire (103′), et un moyen formant compteur (204) destiné à compter lesdites impulsions, de sorte que le contenu dudit moyen formant compteur représente la position dudit transducteur (102).

4. Système de commande d'accès pour un transducteur, tel que défini dans la revendication 3, dans lequel ledit moyen de calcul (210) produit des données indicatrices de ladite demi-distance (½D), et des premier et second montants supposés qui seront portés dans ledit moyen formant compteur (204), quand ledit transducteur (102) aura été déplacé respectivement des distances ½D et D, à partir de la position instantanée.
